# EUROPEAN PATENT APPLICATION

(11) **EP 2 466 147 A1**
(43) Date of publication of application: **20.06.2012**
(21) Application number: 10425382.8
(22) Date of filing: 14.12.2010
(51) Int. Cl.: F04D 25/06, F04D 25/08, F04D 29/66, B29C 45/16, H02K 5/24, F04D 29/42, F04D 29/10

(54) **Radial ventilator and electric motor connected by a vibration damper**

(71) Applicant: Elica S.p.A., 60044 Fabriano (Ancona) (IT)
(72) Inventor: Torregiani, Stefano, 60100 Ancona (IT); Pallotta, Marco, 60022 Castelfidardo (Ancona) (IT)
(74) Representative: Leihkauf, Steffen Falk

(57) **Abstract**

A radial ventilator (1) comprises a housing (2), an impeller (6) received in the housing, an electric motor (7) connected outside of the housing (2) and having a rotor (8) fixed onto a drive shaft (9) for the direct actuation of the impeller (6), a motor support (10) that receives a stator (11) including windings and at least one bearing (12, 13) to rotatably support the drive shaft (9), in which the motor support (10) can be fixed to the housing (2) of the radial ventilator (1) through a connection portion (14), a damping element (23) irreversibly connected to the motor support (10) and forming the connection portion (14).

## Description

### DESCRIPTION

The object of the present invention is a motor group for a radial ventilator and a radial ventilator equipped with such a motor group.

Known radial ventilators, in particular ventilators intended to send air and/or gas (frequently in the form of their mixture) to boilers, like for example condensing boilers, comprise a housing equipped with an intake opening and a discharge opening for air. Inside the housing there is an impeller capable of rotating about a rotation axis. The air enters into the housing through the intake opening in the axial direction, crosses the impeller and is discharged from it in the radial direction into a spiral portion of the housing, from where the air reaches the discharge opening. In order to move the impeller there is a motor group with an electric motor and a motor support that connects the electric motor to the housing, for example through connection screws. In order to limit the transmission of vibrations between the motor and the housing of the ventilator there are rubber bushings with a through opening for connection screws to pass through, so that, in the discrete screw connection points, the rubber bushings are arranged between the motor support and the housing of the ventilator. Such rubber bushings within certain limits damp the vibrations and the relative movements between the motor group and the housing in a direction parallel to the rotation axis of the impeller. In addition, there are further rubber blocks arranged between the motor support and the housing and oriented to damp vibrations and relative movements in the direction transversal to the rotation axis of the impeller. Although dampers are foreseen, the vibrations and the noise deriving from the motor and from the movements of the fluid and of the impeller inside the housing are noticeable and annoying, in particular in the home. Moreover, the arrangement of numerous rubber dampers between the motor support and the housing of the ventilator make its assembly complex and, therefore, expensive.

A purpose of the present invention is therefore to provide a motor group for a radial ventilator and a radial ventilator that are easy to assemble and that allow an effective reduction of noise and of the vibrations during operation.

These and other purposes are accomplished through a motor group for a radial ventilator according to claim 1 and a radial ventilator according to claim 10.

In order to better understand the invention and appreciate its advantages, some non-limiting example embodiments thereof will be described hereafter, with reference to the figures, in which:

**-** figure 1 is a partial perspective view of a radial ventilator according to an embodiment of the invention;

**-** figure 2 is a partial section view of the radial ventilator in figure 1;

**-** figures 3 and 4 are perspective views of a motor support according to an embodiment;

**-** figure 5 is a sectioned perspective view of the motor support of figure 2;

**-** figures 6 and 7 are perspective views of an Archimedean screw of the ventilator housing according to an embodiment;

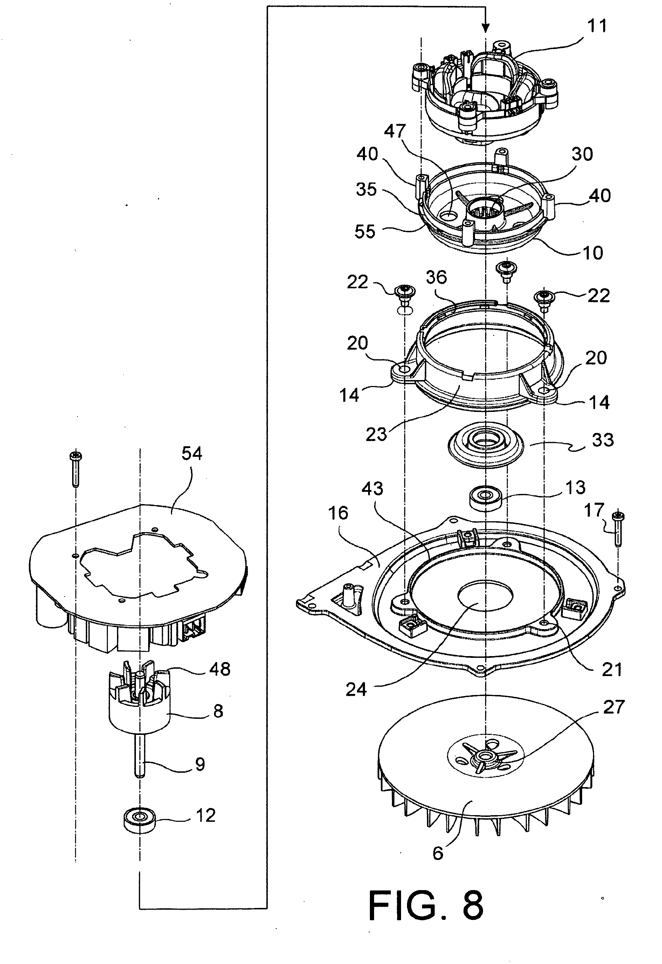

**-** figure 8 is a partial exploded view of a radial ventilator according to an embodiment;

With reference to the figures, a radial ventilator is indicated with reference numeral 1. The ventilator 1 is for example suitable for conveying air and/or gas (also in the form of their mixture) towards a burner or a boiler or a generic heating system. The ventilator 1 is particularly suitable for conveying air and/or gas towards a condensing boiler.

The radial ventilator 1 comprises a housing 2 that defines an impeller space 3 inside which the impeller 6 is received, as well as an intake opening 4 and a discharge opening 5.

The ventilator 1 also comprises an electric motor 7 connected outside of the housing 2 and equipped with a rotor 8 fixed onto a drive shaft 9 for direct actuation of the impeller 6, as well as a motor support 10 that receives a stator 11 including windings and at least one bearing 12, 13 for the rotary support of the drive shaft 9. The motor support 10 is separate from the housing 2 and fixed to it through at least one connection portion 14. In order to reduce the transmission of vibrations between the motor 7 and the housing 2, a damping element 15 made from yielding material is arranged between them.

In accordance with an aspect of the invention, the damping element 23 is irreversibly connected to the motor support 10 and forms the aforementioned connection portion 14.

This allows a substantial reduction in components of the ventilator and facilitates and speeds up its assembly.

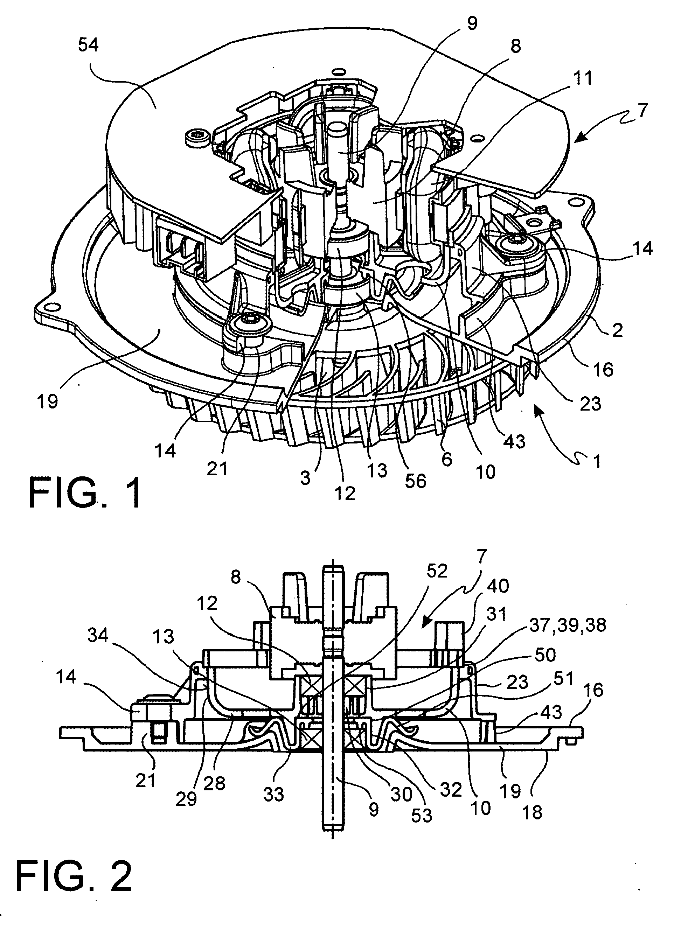

In accordance with an embodiment, the housing 2 preferably comprises two distinct parts that can be connected together, for example a half-shell 15 (or Archimedean screw) that defines the impeller space 3 and a cover 16 suitable for closing the impeller space 3. The half-shell 15 and the cover 16 can be connected together for example through threaded connection members 17. The cover 16 can also comprise a projecting portion 18 (figure 2) suitable for inserting with shape connection in the impeller space 3 defined by the half-shell 15, advantageously substantially matching it.

The cover 16 forms a front wall 19 suitable for supporting the motor 7 and having an opening 24 for the passage of the drive shaft 9 of the motor 7 through the cover 16 and its connection with the impeller 6 housed in the impeller space 3. Alternatively, such a front wall 19 is formed by the half-shell 15.

The motor 7 can be connected to the cover 16 or, alternatively, to the half-shell 15 through connection screws 22 able to be inserted in holes 20 of the connection portions 14 of the damping element 23 and able to be screwed into corresponding screw seats 21 of the cover 16. Preferably, the screw seats 21 are arranged along a circumference at constant angular distances. For example, the screw seats 21 can be three in number and spaced apart by 120°. In order to make the coupling between the connection screws 22 and the screw seats 21 possible, the damping element 23 can form as many connection portions 14 distributed in a way corresponding to the screw seats 21 of the cover 16.

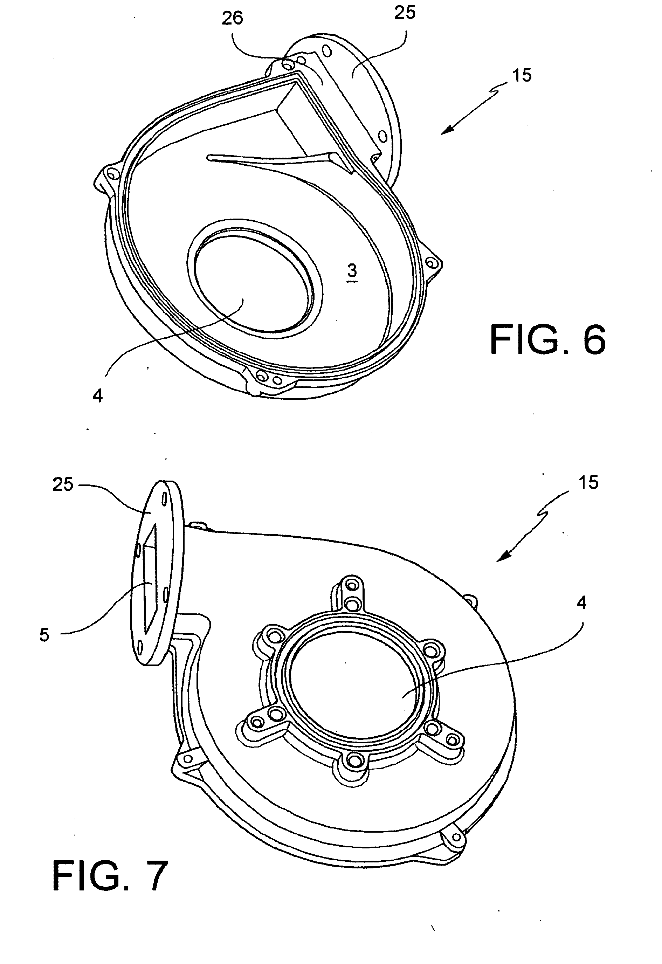

According to an embodiment, the intake opening 4 and the discharge opening 5 are formed in the half-shell 15 (figure 7). In particular, the intake opening 4 is preferably arranged laterally on the half-shell 15 and configured so that the entering air and/or gases go into the impeller space 3 and reach the impeller 6 along a substantially axial direction. The discharge opening 5 is preferably formed at an end 25 of a discharge portion 26 of the half-shell 15 that extends in a direction substantially tangential to the housing 2, so that the air and/or gases discharged by the impeller 6 circulate in the impeller space 3 according to substantially tangential flow lines and are discharged by the ventilator 1 through the discharge opening 5 without undergoing excessive deviations in their motion.

At the end 25 of the discharge portion 26 there can be a flange suitable for connecting the ventilator 1 to outer support elements (not shown in the figures), for example through threaded connection members.

In order to allow the connection of the impeller 6 to the motor 7, the impeller comprises a support element 27 with a tubular portion suitable for receiving the drive shaft 9 and that preferably extends parallel to the rotation axis A of the impeller. The shaft 9 can be connected to the tubular portion through locking means (not shown in the figures) suitable for connecting the latter so as to rotate and translate as a unit along the rotation axis A.

The impeller 6 is preferably made in a single piece of plastic material.

The housing 2, in particular the half-shell 15 and the cover 16, are preferably made from aluminium or aluminium alloy.

In accordance with an embodiment, the motor support 10 is made from rigid material, for example Polyethylene, hard PVC, Polycarbonate, and the damping element 23 is made from elastic yielding material, for example rubber or soft PVC. Advantageously, the damping element 23 is injection co-moulded with the motor support 10.

The motor support 10 comprises a bottom wall 28 arranged on the side of the motor 7 facing towards the housing 2 and a side wall 29, circumferential with respect to the axis A of the rotor. Such a side wall 29, whilst extending substantially circumferentially with respect to the axis A, can be circular, polygonal, in a closed loop or in distinct sections spaced apart from one another. The bottom wall 28 forms a passage opening 30 through which the drive shaft 9 extends, as well as a first bearing seat 31 facing towards the inside of the motor 7 and suitable for receiving an inner bearing 12 for the drive shaft 9. A second bearing seat 32 formed in the bottom wall 28 and facing towards the outside of the motor 7 (in other words towards the housing 2) is suitable for receiving an outer bearing 13 through the interposition of an elastic sealing body 33 that will be described hereafter.

The side wall 29 of the motor support 10. has a radially outer surface 34 that forms a circumferential damper seat 35 preferably in a closed loop that engages a corresponding annular edge 36 of the damping element 23. The damper seat forms a step 37 or shoulder with a contrast surface 38 facing in the direction of the housing 2 and that abuts against a corresponding surface formed by a step 39 in the connection edge 36 of the damping element 23.

With the exception of localised interruptions, due to the presence of attachment columns 40 for the locking of the stator 11, the damper seat 35 with the step 37 and the step 39 of the connection edge 36 extend substantially all the way round the motor support 10.

The motor support 10, in particular the side wall 29, can also form one or more anchoring projections (for example a perforated flange 55 projecting radially outwards and extending all the way round the motor support 10), embedded in the damping element 23 and configured so as to make an irreversible shape connection and/or that prevents a relative rotation between the motor support 10 and the damping element 23.

Advantageously, the damping element 23 is shaped like a bell with a circumferential base edge 41 opposite the aforementioned connection edge 36 and suitable for adhering against the front wall 19 of the housing 2 along a prevalent portion of its circumference or along its entire circumference.

In accordance with an embodiment, the damping element 23, in the vicinity of the base edge 41, forms a support flange 42 extending substantially parallel to the base edge 41 but oriented transversally with respect to it (for example projecting radially towards the outside and/or towards the inside of the damping element 23). The support flange 42 stabilises the base edge 41 of the damping element 23 and is suitable for adhering against an annular rib 43 of the front wall 19 of the housing 2, said rib 43 projecting axially towards the outside of the housing, in other words towards the motor 7.

In this way, there is support between the damping element 23 and the housing 2 in the axial direction between the support flange 42 and the annular rib 43, as well as between the base edge 41 and the front wall 19 and, in the radial direction, between the base edge 41 and the annular rib 43.

This ensures particularly effective damping of the vibrations and, consequently, a great reduction in noise of the ventilator with respect to the prior art.

The connection portions 14 formed by the damping element 23 comprise brackets projecting radially outwards that define the through hole 20 to receive the connection screw 22. The radial bracket can comprise a plate 44 that defines the through hole 20 and that lies in a transversal plane, preferably perpendicular to the rotation axis A of the drive shaft, as well as one or more reinforcement ribs 45 transversal to the plate 44 and connected to an outer edge thereof. In order not to obstruct the connection area with the housing and to take them into traction, the reinforcement ribs 45 advantageously extend from the plate 44 in the motor direction opposite the housing 2.

In accordance with an embodiment, the connection portions 14 and, therefore, the motor-housing connection areas are connected together through the aforementioned support flange 42.

The damping element 23 can form one or more cooling openings 46 for the passage of a flow of cooling air through the motor. Such cooling openings 46 can be formed in the base edge 41 of the damping element 23 and allow air to pass from outside the ventilator, through further cooling holes 47 in the bottom wall 28 of the motor support 10, along the hot components of the motor, including an electric control board 54. The cooling flow is generated by a cooling impeller 48 connected, for example formed in one piece, with the rotor 8.

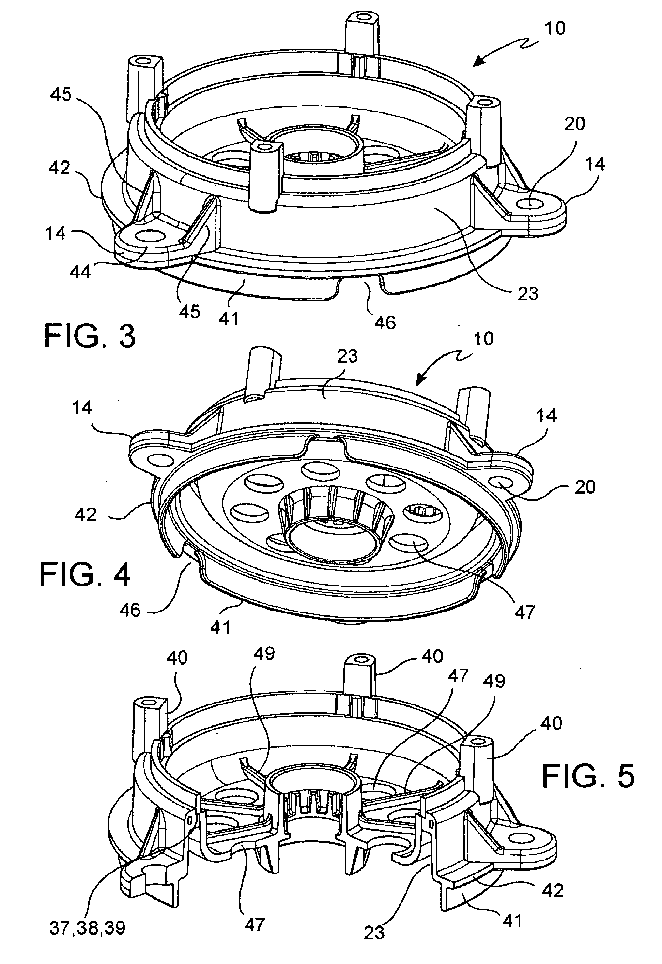

In accordance with a further embodiment, the bottom wall 28 of the motor support 10 forms a plurality of radial ribs 49 extending from the first bearing seat 31 outwards up to the side wall 29 and, preferably, arranged in sequence alternating with the cooling holes 47 (figure 5) .

In accordance with a further aspect of the invention, the aforementioned elastic sealing body 33 comprises a tubular sealing portion 50 suitable for being arranged between the outer bearing 13 and the second bearing seat 32, and an outer sealing portion 51 suitable for elastically adhering forming a seal against the front wall of the housing 2. The tubular sealing portion 50 comprises a front shoulder 52 with an annular bulge 53 that is elastically deformable in the axial direction so as to exert an elastic preload on the outer bearing 13. Advantageously, the tubular sealing portion 50 also forms an annular expansion space 56 radially inside and/or radially outside the annular bulge 53 so as to allow a strong compression of the bulge 53 itself and, consequently, a suitable elastic preload.

This makes it possible to avoid the need to provide and mount an additional preload spring in the bearing seat. The particular configuration of the elastic sealing body 33 is *per sé* advantageous and also able to be used independently from the further characteristics of the ventilator described up to now. However, the man skilled in the art will of course understand that the combination of the characteristics of the sealing body with the other characteristics described in relation to the motor and to the ventilator allow a substantial reduction in the single components to be assembled and a consequent simplification and speeding up of the manufacturing of the motor and of the ventilator.

The man skilled in the art can bring numerous adaptations, modifications or replacements of elements with other functionally equivalent ones to the embodiments described, in order to satisfy contingent or specific requirements, without however departing from the scope of the following claims.

## Claims

1. Radial ventilator (1), comprising:
- a housing (2) that defines an impeller space (3), as well as an intake opening (4) and a discharge opening (5),
- an impeller (6) received in the impeller space (3),
- an electric motor (7) connected outside of the housing (2), the motor (7) comprising:
- a rotor (8) fixed onto a drive shaft (9) for actuation of the impeller (6),
- a motor support (10) that receives a stator (11) including windings and at least one bearing (12, 13) to rotatably support the drive shaft (9), in which the motor support (10) can be fixed to the housing (2) of the radial ventilator (1) through a connection portion (14),
- a damping element (23) made from yielding material arranged between the motor (7) and the housing (2),
**characterised in that** the damping element (23) is irreversibly connected to the motor support (10) and forms said connection portion (14).

2. Radial ventilator (1) according to claim 1, wherein the housing (2) comprises a half-shell (15) that defines the impeller space (3) and a cover (16) able to be connected to the half-shell (15) to close the impeller space (3), wherein a front wall (19) to which the motor (7) is fixed and that forms an opening (24) for the passage of the drive shaft (9) is formed from said cover (16) or half-shell (15).

3. Radial ventilator (1) according to claim 1 or 2, wherein the motor support (10) is made from rigid material and the damping element (23) is made from elastic yielding material, injection co-moulded with the motor support (10).

4. Radial ventilator (1) according to any one of the previous claims, wherein the motor support (10) comprises a bottom wall (28) arranged on the side of the motor (7) facing towards the housing (2) and a side wall (29) laying substantially circumferentially with respect to an axis (A) of the rotor (8), said bottom wall (28) forming:
- a passage opening (30) through which the drive shaft (9) extends,
- a first bearing seat (31) facing towards the inside of the motor (7) and suitable for receiving an inner bearing (12) for the drive shaft (9),
- a second bearing seat (32) facing towards the housing (2) and suitable for receiving an outer bearing (13) through the interposition of an elastic sealing body (33) in sealed contact with the housing (2).

5. Radial ventilator (1) according to any one of the previous claims, wherein the motor support (10) forms a circumferential damper seat (35) in a closed loop that engages a corresponding annular edge (36) of the damping element (23), wherein said damper seat (35) forms a step (37) with a contrast surface (38) facing towards the housing (2) and that abuts against a corresponding surface formed by a step (39) in the connection edge (36) of the damping element (23).

6. Radial ventilator (1) according to claim 5, wherein, with the exception of possible localised interruptions, the damper seat (35) with the step (37) and the step (39) of the connection edge (36) extend substantially all the way around the motor support (10).

7. Radial ventilator (1) according to any one of the previous claims, wherein the motor support (10) forms one or more anchoring projections (55) embedded in the damping element (23) and configured so as to make an irreversible shape connection and such as to prevent a relative rotation between the motor support (10) and the damping element (23) around a rotation axis (A) of the rotor (8).

8. Radial ventilator (1) according to claim 7, wherein said anchoring projection (55) comprises a perforated flange projecting radially outwards and extending all the way around the motor support (10)

9. Radial ventilator (1) according to any one of the previous claims, wherein the damping element (23) is bell shaped with an edge (36) for connecting with the motor support (10) and a circumferential base edge (41) opposite the connection edge (36) and having a portion adhering against a front wall (19) of the housing (2) along at least one prevalent portion of its circumference.

10. Radial ventilator (1) according to claim 9, wherein the damping element (23), in the vicinity of the base edge (41), forms a support flange (42) extending parallel to the base edge (41) and oriented transversally with respect to said base edge (41),
wherein said support flange (42) adheres in contact against an annular rib (43) of the front wall (19), said rib (43) projecting axially towards the motor (7).

11. Radial ventilator (1) according to claim 10, wherein the connection portions (14) are connected to one another through the aforementioned support flange (42).

12. Radial ventilator (1) according to any one of the previous claims, wherein the connection portions (14) formed by the damping element (23) comprise brackets projecting radially outwards that define a through hole (20) to receive a connection screw (22),

13. Radial ventilator (1) according to any one of the previous claims, wherein the damping element (23) forms at least one cooling opening (46) for the passage of a flow of cooling air through the motor.

14. Electric motor (7) for a radial ventilator (1), the motor (7) comprising:
- a rotor (8) fixed onto a drive shaft (9) for the actuation of an impeller (6) received in a housing (2) of the radial ventilator (1),
- un motor support (10) that receives a stator (11) including windings and at least one bearing (12, 13) to rotatably support the drive shaft (9), in which the motor support (10) can be fixed to the housing (2) of the radial ventilator (1) through a connection portion (14),
- a damping element (23) made from yielding material suitable for being arranged between the motor (7) and the housing (2),
**characterised in that** the damping element (23) is irreversibly connected to the motor support (10) and forms said connection portion (14).

15. Radial ventilator (1) according to claim 4, wherein the elastic sealing body (33) comprises a tubular sealing portion (50) suitable for being arranged between the outer bearing (13) and the second bearing seat (32), and an outer sealing portion (51) suitable for elastically adhering so as to form a seal against the front wall of the housing (2),
wherein the tubular sealing portion (50) comprises a front shoulder (52) with an annular bulge (53) elastically deformable in the axial direction so as to exert an elastic preload on the outer bearing (13).

16. Radial ventilator (1) according to claim 15, wherein the tubular sealing portion (50) forms an annular expansion space (56) radially inside and/or radially outside the annular bulge (53) so as to allow a strong elastic compression of the bulge (53) itself.
